# EUROPÄISCHE PATENTANMELDUNG

(11) **EP 4 538 001 A1**
(43) Veröffentlichungstag der Anmeldung: **16.04.2025**
(21) Anmeldenummer: 23202727.6
(22) Anmeldetag: 10.10.2023
(51) Int. Cl.: B25J 21/00, B25H 3/02

(54) **MOBILER WERKZEUGCONTAINER FÜR EINEN BAUROBOTER**

(71) Anmelder: Hilti Aktiengesellschaft, 9494 Schaan (LI)
(72) Erfinder: Brugger, Peter, 6800 Feldkirch (AT); Zanona, Julia, 6800 Feldkirch (AT)
(74) Vertreter: Hilti Aktiengesellschaft Corporate Intellectual Property

(57) **Zusammenfassung**

Die Erfindung betrifft einen mobilen Werkzeugcontainer (10) zur Aufnahme eines Bauroboters (64). Er ist dadurch gekennzeichnet, dass der Werkzeugcontainer (10) eine Ladeseite (12, 13) und eine von der Ladeseite (12, 13) verschiedene Wartungsseite (14, 15) aufweist, wobei die Ladeseite (12, 13) und die Wartungsseite (14, 15) jeweils wenigstens ein Öffnungselement (16, 18) zum Öffnen oder Schließen der jeweiligen Seite aufweisen. Er kann einen effizienten Einsatz von Baurobotern (64) auf Baustellen ermöglichen.

## Beschreibung

Die Erfindung geht aus von einem mobilen Werkzeugcontainer zur Aufnahme eines Bauroboters.

Bauroboter leisten heutzutage eine immer wichtigere Unterstützung bei der Ausführung von Bauaufgaben auf Baustellen, beispielsweise auf Hochbau-Baustellen oder Tiefbau-Baustellen.

Hohe Herstellungskosten sowie einer immer noch begrenzte Verfügbarkeit erfordern einen effizienten Einsatz der verfügbaren Bauroboter. Die Effizienz eines Einsatzes wird besonders durch den Umfang erforderlicher Rüstzeiten beeinflusst.

Aufgabe der vorliegenden Erfindung ist es daher, Vorrichtungen anzubieten, die einen besonders effizienten Einsatz eines Bauroboters auf Baustellen ermöglichen.

Gelöst wird die Aufgabe durch einen mobilen Werkzeugcontainer zur Aufnahme eines Bauroboters, der eine Ladeseite und eine von der Ladeseite verschiedene Wartungsseite aufweist, wobei die Ladeseite und die Wartungsseite jeweils wenigstens ein Öffnungselement zum Öffnen oder Schließen der jeweiligen Seite aufweisen. Mit anderen Worten lässt sich der mobile Werkzeugcontainer von wenigstens zwei Seiten, beispielsweise einer Längsseite und einer Querseite, öffnen oder schließen.

Der Bauroboter kann über die Ladeseite in den mobilen Werkzeugcontainer eingeladen oder aus diesem ausgeladen werden.

Ist der Bauroboter in den mobilen Werkzeugcontainer eingeladen, so kann er von der Wartungsseite aus für einen nachfolgenden Einsatz auf besonders einfache und effiziente Weise vorbereitet werden. Wartungsarbeiten, beispielsweise Aufladen eines Energiespeichers, Bestücken mit notwendigem Material, Entladen von Abfall oder dergleichen, können über die Wartungsseite erfolgen. Es ist somit nicht notwendig, den Bauroboter zunächst aus dem mobilen Werkzeugcontainer auszuladen, bevor die Wartungsarbeiten ausgeführt werden können. Rüstzeiten lassen sich dadurch minimieren. Dies kann gleichermaßen für Rüstzeiten vor Beginn einer Bauarbeit als auch für Rüstzeiten nach Abschluss einer Bauarbeit gelten.

Dabei kann insbesondere zum Tragen kommen, das oftmals für die Wartungsarbeiten wichtige Bereiche des Bauroboters von einer Rückseite des Bauroboters nicht oder nur sehr begrenzt zugänglich sind. Hier ergibt sich somit ein besonders vorteilhafter Eingriffspunkt der Erfindung.

Die Öffnungselemente können beispielsweise Türen, Tore, Klappen, Rolltore oder dergleichen sein oder umfassen.

Die Ladeseite kann wenigstens ein Öffnungselement aufweisen, das eine vertikale Klappe aufweist. Befindet sich die vertikale Klappe an einer Decke des Werkzeugcontainers, so kann sie nach oben ausgeklappt werden. Die vertikale Klappe beansprucht somit keinen Platz seitlich des Werkzeugcontainers. Der mobile Werkzeugcontainer kann somit auch in besonders engen Bereichen aufgestellt werden, wobei der Bauroboter dennoch problemlos eingeladen oder ausgeladen werden kann.

Befindet sich die vertikale Klappe an einer Unterseite des Werkzeugcontainers, beispielsweise einem Boden des Werkzeugcontainers, so kann die Klappe nach unten geklappt werden. Die Klappe kann dann auch als Rampe nutzbar sein.

Es ist auch denkbar, dass die Ladeseite und / oder die Wartungsseite ein wenigstens zweiteiliges Öffnungselement aufweist beziehungsweise aufweisen. Beispielsweise kann das Öffnungselement zwei Klappen aufweisen, wobei eine Klappe nach unten und eine nach oben klappt. Dadurch kann sich ein besonders platzsparendes Konzept für das Öffnungselement und damit auch für den Werkzeugcontainer insgesamt ergeben. Denkbar ist auch, dass beispielsweise das Öffnungselement eine vertikale Klappe an der Unterseite aufweist und ein Rolltor oder ein vertikal verschiebbares Schiebetor an einer Oberseite des Werkzeugcontainers aufweist. Dann kann die Klappe wiederum als Rampe verwendet werden. Der obere Teil des Öffnungselements der Ladeseite kann dann zusätzlich besonders platzsparend geöffnet werden. Das Rolltor oder das Schiebetor können beispielsweise auf eine Oberseite des Werkzeugcontainers aufgeschoben werden.

Auf der Wartungsseite kann sich das Öffnungselement über wenigstens die Hälfte der Wartungsseite erstrecken. Wenigstens die Hälfte der Wartungsseite kann sich somit öffnen lassen. Dies ist vorteilhaft, da häufig unterschiedliche Bereiche des Bauroboters zur Wartung erreichbar sein sollten. Beispielsweise können Wartungsarbeiten einen Roboterarm des Bauroboters als auch dem Roboterarm entgegengesetzte Bereiche, beispielsweise dort befindliche Stauräume, betreffen. Beispielsweise kann es sein, dass am Roboterarm ein Werkzeug oder eine Werkzeugmaschine zu wechseln ist. Die Stauräume können zu beladen oder zu entladen sein. Durch die genannte Größe des Öffnungselementes der Wartungsseite lassen sich dann im Regelfall sowohl der Roboterarm als auch die Stauräume gut erreichen.

Weist der mobile Werkzeugcontainer ein Fahrwerk auf, so kann er, beispielsweise auf der Baustelle, zu verschiedenen Orten bewegt werden. Der mobile Werkzeugcontainer kann also ein Fahrzeug sein oder als Fahrzeug ausgebildet sein. Er kann beispielsweise ein Anhänger sein. Denkbar ist auch, dass der mobile Werkzeugcontainer ein eigenständiges, beispielsweise ein 4-, 6- oder 8-rädriges, Fahrzeug ist. Das Fahrwerk kann Ketten, Räder, Rollen und / oder dergleichen aufweisen.

Das Fahrwerk kann einen Motor zur Fortbewegung des mobilen Werkzeugcontainers aufweisen, so dass der Werkzeugcontainer selbst bei hohem Gewicht des in ihm aufgenommenen Bauroboters durch einen einzigen Bauarbeiter bewegbar ist.

Das Fahrwerk kann verstellbar sein. Insbesondere kann es absenkbar und / oder aufrichtbar ausgebildet sein. Beispielsweise können Rollen ausfahrbar und / oder einfahrbar sein.

Dann kann beispielsweise der Werkzeugcontainer mithilfe des Fahrwerks verlagert werden. Anschließend kann das Fahrwerk abgesenkt werden, sodass der Werkzeugcontainer kippsicher auf dem Boden aufliegt.

Denkbar ist insbesondere auch, dass der Werkzeugcontainer eine Steuerung aufweist. Die Steuerung kann mithilfe eines Rechners, auf dem eine Steuersoftware ausgeführt wird, implementiert sein.

Die Steuerung kann eingerichtet sein, dass sich der Motor oder das Fahrwerk nur unter bestimmten Bedingungen einschalten und / oder bewegen lassen.

Denkbar ist beispielsweise, dass die Rollen nur dann ausfahrbar sind, wenn der Werkzeugcontainer unbeladen ist. Das heißt, die Rollen können nur dann ausgefahren werden, wenn der Werkzeugcontainer leer ist. Bedienungsfehler und nachfolgend mögliche Unfälle können dadurch vermieden werden.

Wenigstens eine Funktion des Werkzeugcontainers kann fernsteuerbar sein. Dazu kann eine Fernsteuerung vorgesehen sein. Die Fernsteuerung kann beispielsweise auf Infrarotlicht und / oder Funk basieren. Denkbar ist auch, dass der Werkzeugcontainer an das Internet anbindbar ist. Dann kann der Werkzeugcontainer mit einem anderen an das Internet angebundenen Gerät, beispielsweise mit einem entsprechend geeignet konfigurierten Smartphone, gesteuert werden.

Der Werkzeugcontainer kann wenigstens einen Tragpunkt aufweisen. Der Tragpunkt kann beispielsweise einen Haken, eine Öse, einen Ring, beispielsweise nach Art eines Karabiners, oder dergleichen aufweisen. Dann kann der Werkzeugcontainer beispielsweise mit einem Kran verladen werden. Der Tragpunkt kann sich an einer Oberseite des Werkzeugcontainers befinden.

Wenigstens einer der Tragpunkte kann schwenkbar ausgebildet sein. Vorzugsweise können alle Tagpunkte schwenkbar ausgebildet sein. Sie können somit vom Werkzeugcontainer ausgeschwenkt werden, um beispielsweise Tragseile des Kranes an diesen einfacher befestigen und den Werkzeugcontainer nachfolgend verladen zu können. In den übrigen Zeiten können die Tragpunkte zurückgeschwenkt werden. In einem solchen zurückgeschwenkten Zustand können sie sich innerhalb eines vom Werkzeugcontainer umschriebenen Quaders befinden. Dadurch kann der Platzbedarf des Werkzeugcontainers erheblich reduziert werden. Beispielsweise können die vom Werkzeugcontainer beanspruchten effektiven Höhen und Breiten um 5 bis 10 Zentimeter reduziert werden. Dies kann im Einzelfall dazu führen, dass der Werkzeugcontainer gerade noch auf Standardmaße üblicher Transportmittel, beispielsweise Sattelzügen, oder auf kleinere Transportstandardvolumina eingepasst werden kann. Ebenso lässt sich hierdurch der Innenraum größer dimensionieren als es möglich wäre, wenn die Tragpunkte nicht verschwenkbar wären. Die Tragpunkte stehen zudem nicht mehr vom Werkzeugcontainer ab, wenn sie nicht gebraucht werden. Unfallrisiken lassen sich dadurch verringern.

Bauroboter sind üblicherweise elektrisch angetrieben. Um beispielsweise den Bauroboter während seines Aufenthaltes in dem Werkzeugcontainer aufladen zu können, ist es vorteilhaft, wenn in einem Innenraum des Werkzeugcontainers ein elektrischer Ladeanschluss ausgebildet ist.

Im Innenraum kann auch ein Vorratsbehälter angeordnet und / oder ausgebildet sein. Der Vorratsbehälter kann beispielsweise als Schrank und / oder Regal ausgebildet sein. Er kann ein oder mehrere Fächer aufweisen. Im Schrank können Verbrauchsmaterialien gelagert sein. Allgemein können Materialien und Gegenstände im Vorratsbehälter bevorratet sein, um sie zu einem späteren Zeitpunkt durch den Bauroboter zu verwenden.

Der Werkzeugcontainer kann auch eine automatische Bestückungsvorrichtung zur Bestückung des im Werkzeugcontainer befindlichen Bauroboters aufweisen. Die automatische Bestückungsvorrichtung kann beispielsweise einen Roboterarm aufweisen. Sie kann eingerichtet sein, Materialien und Gegenstände aus dem Vorratsbehälter zu entnehmen und im oder am Bauroboter zu platzieren. Ebenso kann sie eingerichtet sein, Materialien und Gegenstände, beispielsweise Abfälle, aus dem Bauroboter zu entfernen und beispielsweise im Vorratsbehälter abzulegen. Dadurch kann es möglich sein, dass eine übliche Wartung des Bauroboters teilautomatisch oder sogar vollautomatisch erfolgt. Es ist beispielsweise denkbar, dass dann der Bauroboter selbst nicht mehr durch einen Bauarbeiter gewartet werden braucht. Lediglich kann es dann noch erforderlich sein, beispielsweise den Vorratsbehälter von Zeit zu Zeit mit neuem Material beziehungsweise neuen Gegenständen auszustatten und / oder Abfallmaterialien und dergleichen aus dem Vorratsbehälter zu entfernen.

Der Werkzeugcontainer kann auch ein Ortungsgerät zur Lokalisierung des Werkzeugcontainers aufweisen. Vorzugsweise kann das Ortungsgerät mit der Steuerung verbunden sein oder einen Teil der Steuerung bilden.

Dann lässt sich beispielsweise detektieren, wo sich der Werkzeugcontainer befindet. Denkbar ist dann beispielsweise auch, dass der Bauroboter selbsttätig zu "seinem" Werkzeugcontainer bei Bedarf zurückfindet. Beispielsweise kann er dann zu dem Werkzeugcontainer fahren, um seinen Energiespeicher neu aufzuladen und / oder um Verbrauchsmaterialien nachzufüllen.

Auch ist denkbar, dass mit Hilfe des Ortungsgerätes der Standort des Werkzeugcontainers von einem entfernten Ort ermittelt wird.

Dann lässt sich beispielsweise feststellen, auf welcher Baustelle sich der Werkzeugcontainer befindet.

Hierdurch lässt sich auch ein Diebstahlschutz zum Schutz vor unerlaubter Entwendung des Werkzeugcontainers und / oder des Bauroboters aufbauen.

In den Rahmen der Erfindung fällt des Weiteren ein **System** aus einem mobilen Werkzeugcontainer, wie er vorausgehend sowie im Zusammenhang mit der Zeichnung erläutert ist, und einem Bauroboter.

Der Bauroboter kann zur Ausführung von Bauarbeiten auf einer Hochbau-Baustelle und / oder einer Tiefbau-Baustelle ausgebildet sein. Er kann zur Ausführung von Bauarbeiten an einer Decke, einer Wand und / oder einem Boden eingerichtet sein. Er kann zum Bohren, Trennen, Meißeln, Schleifen und / oder Setzen eines Bauelements ausgebildet sein. Er kann ein oder mehrere Werkzeugmaschinen aufweisen. Insbesondere kann die Werkzeugmaschine wechselbar angeordnet und / oder ausgebildet sein. Die Werkzeugmaschine kann eine elektrische Werkzeugmaschine sein. Die Werkzeugmaschine kann ein Werkzeug aufweisen.

Der Endeffektor kann die Werkzeugmaschine und / oder das Werkzeug umfassen. Beispielsweise kann der Endeffektor eine elektrische Werkzeugmaschine aufweisen. Die elektrische Werkzeugmaschine kann ein Bauwerkzeug, ein Trennwerkzeug, ein Schleifwerkzeug und / oder ein Setzwerkzeug umfassen. Denkbar ist auch, dass der Endeffektor und / oder die Werkzeugmaschine zum Markieren ausgebildet sind. Beispielsweise kann der Endeffektor ein Farbsprühgerät aufweisen.

Der Manipulator kann als Roboterarm ausgebildet sein. Der Manipulator kann auch eine Hubvorrichtung aufweisen. Die Hubvorrichtung kann das vom Manipulator erreichbare Gesamtvolumen vergrößern. Der Manipulator kann wenigstens drei Freiheitsgrade aufweisen. Insbesondere kann er wenigstens sechs Freiheitsgrade aufweisen.

Der Bauroboter kann auch eine mobile Plattform aufweisen. Die mobile Plattform kann ein Räderfahrwerk und / oder ein Kettenfahrwerk umfassen. Die mobile Plattform kann wenigstens zwei Freiheitsgrade aufweisen. Der Bauroboter kann insgesamt wenigstens zehn Freiheitsgrade aufweisen.

Der Bauroboter kann einen Entfernungsmesser aufweisen. Der Entfernungsmesser kann als 3D-Kamera ausgebildet sein und / oder eine solche umfassen. Alternativ oder ergänzend kann er einen Laserscanner umfassen.

Die Steuerung kann als Rechnereinheit ausgebildet sein. Sie kann einen Prozessor, eine Speichereinheit und / oder einen auf dem Prozessor ausführbaren Programmcode aufweisen. Der Prozessor kann ein oder mehrere Unterprozessoren aufweisen. Der Programmcode kann eingerichtet sein, das Verfahren zur Steuerung des Bauroboters durch die Steuerung auszuführen.

Bei einer besonders bevorzugten Variante des Systems weist der mobile Werkzeugcontainer eine erste Kommunikationseinrichtung auf. Der Bauroboter kann eine zweite Kommunikationseinrichtung aufweisen. Die erste und die zweite Kommunikationseinrichtung können dann eingerichtet sein, miteinander Daten auszutauschen. Die erste und / oder die zweite Kommunikationseinrichtung können als Funk-basiert sein. Allgemein kann die Kommunikation Funk-basiert und / oder Licht-basiert sein. Denkbar ist, dass die Kommunikation, insbesondere der Austausch der Daten, über das Internet erfolgen kann.

Der Werkzeugcontainer kann eingerichtet sein, den Bauroboter zu überwachen und / oder zu steuern. Beispielsweise ist denkbar, dass der Werkzeugcontainer eingerichtet ist, zu überwachen, dass der Bauroboter, wenn er in den Werkzeugcontainer eingeladen ist, sich im Stillstand befindet. Es kann auch überwacht werden, das dann Bremsen des Bauroboters aktiviert sind.

Ebenso ist denkbar, dass der Werkzeugcontainer wenigstens eine Funktion des Bauroboters steuert. Beispielsweise kann der Werkzeugcontainer eingerichtet sein, bei dem in ihm eingeladen Bauroboter die Bremsen ferngesteuert zu aktivieren. Ebenso ist es denkbar, dass der Bauroboter den Werkzeugcontainer überwacht und / oder steuert. Es ist beispielsweise denkbar, dass der Bauroboter eingerichtet ist, das Öffnungselement der Ladeseite zu öffnen oder zu schließen. Dann kann der Bauroboter beispielsweise selbsttätig sich in den Werkzeugcontainer einladen und dazu rechtzeitig das Öffnungselement der Ladeseite öffnen. Nachdem der Bauroboter vollständig in den Werkzeugcontainer eingefahren ist, kann er das Öffnungselement der Ladeseite wieder schließen.

Die Autonomie des Systems lässt sich ferner auch dadurch noch weiter steigern, wenn der Werkzeugcontainer eine Reinigungsanlage aufweist. Die Reinigungsanlage kann eingerichtet sein, Teile und / oder den gesamten Bauroboter zu reinigen. Beispielsweise kann die Reinigungsanlage einen Hochdruckreiniger oder allgemein ein Sprühgerät aufweisen. Denkbar ist, wenn der Bauroboter einen Roboterarm aufweist, dass der Bauroboter das Sprühgerät vom Werkzeugcontainer greift, sich mithilfe des Sprühgeräts selbst reinigt und anschließend das Sprühgerät wieder am und / oder im Werkzeugcontainer verstaut. Das Sprühgerät kann dazu ein Fluid, beispielsweise Luft, wie beispielsweise Pressluft, und / oder eine Reinigungsflüssigkeit wie beispielsweise Wasser oder Wasser mit Zusätzen oder dergleichen, versprühen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1 bis Fig. 3: perspektivische Ansichten eines Werkzeugcontainers von schräg vorne, von schräg hinten, von schräg unten sowie nochmals von schräg vorne;
- Fig. 4: eine Frontansicht auf eine Wartungsseite des Werkzeugcontainers;
- Fig. 5: den Werkzeugcontainer von oben;
- Fig. 6 und Fig. 7: vergrößerte Ausschnitte der Fig. 5:
- Fig. 8: eine schematische Draufsicht auf eine Innenwand des Werkzeugcontainers mit an der Innenwand angeordneten Elementen sowie
- Fig. 9: eine schematische Seitenansicht eines sich in den Werkzeugcontainer selbst einladenden Bauroboters.

In der nachfolgenden Beschreibung der Figuren werden zur Erleichterung des Verständnisses der Erfindung für gleiche oder sich funktional entsprechende Elemente jeweils die gleichen Bezugszeichen verwendet.

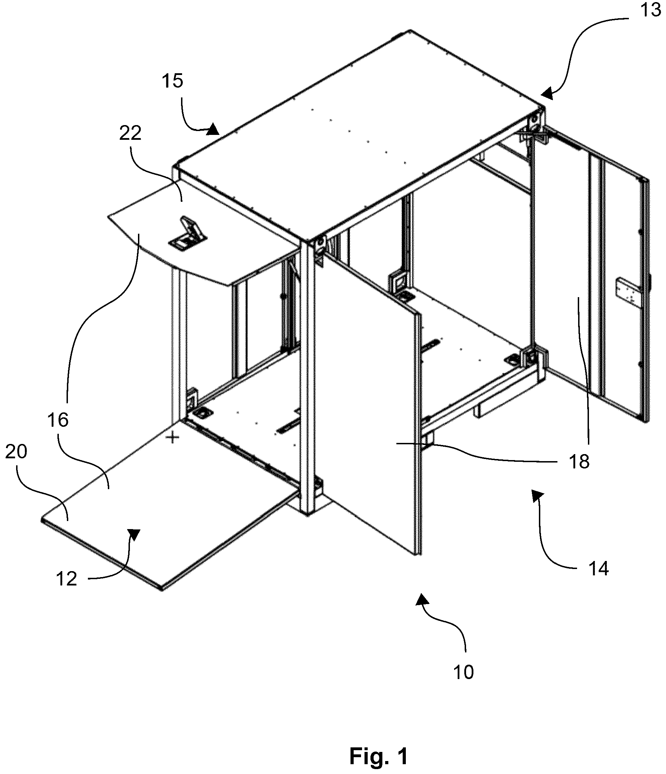

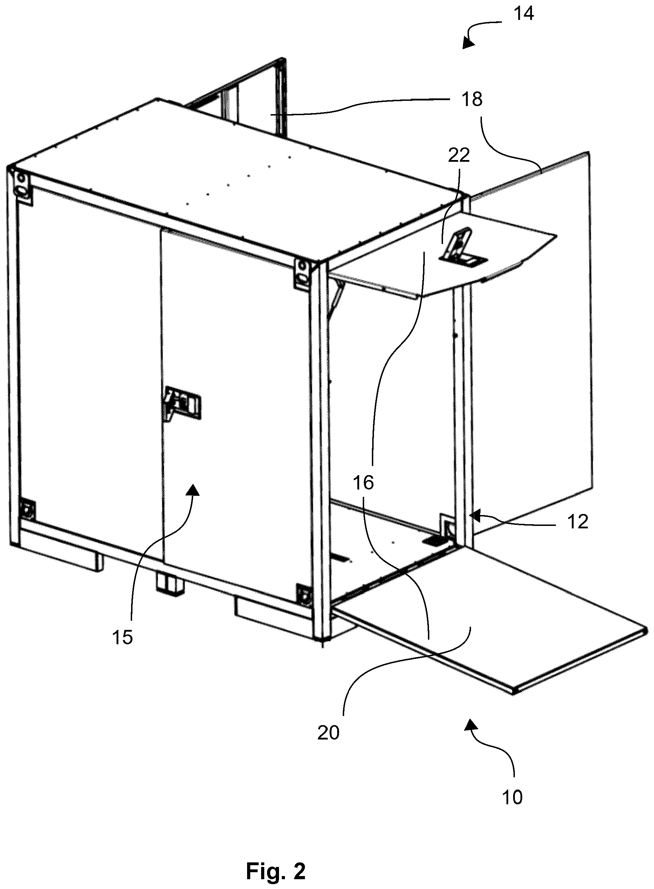

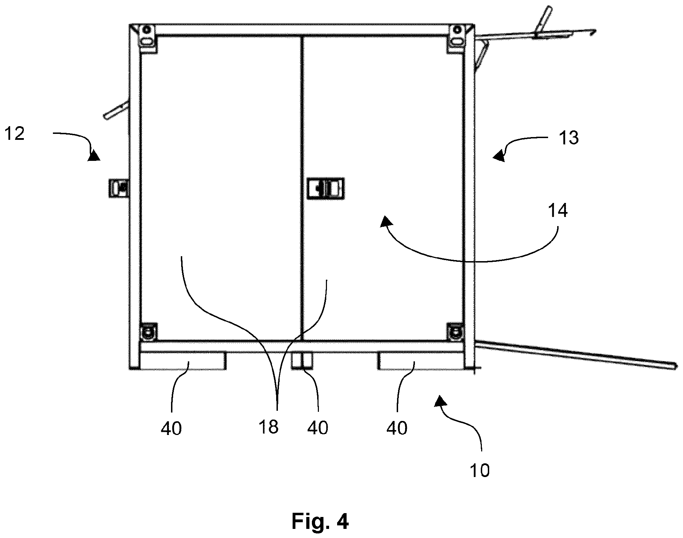

**Fig. 1** bis **Fig. 5** zeigen einen mobilen Werkzeugcontainer **10**. Der Werkzeugcontainer 10 dient zur Aufnahme eines Bauroboters. Der Werkzeugcontainer 10 ist im Wesentlichen quaderförmig. Er weist ein an den aufzunehmenden Bauroboter angepasstes Innenvolumen auf. Das Innenvolumen beträgt wenigstens 1 m³, beispielsweise 2 m³.

Der Werkzeugcontainer 10 weist eine Ladeseite **12** und eine von der Ladeseite 12 verschiedene Wartungsseite **14** auf.

Dieses Ausführungsbeispiel weist noch eine zweite Ladeseite **13** auf. Die zweite Ladeseite 13 ist analog zur Ladeseite 12 und im Wesentlichen spiegelsymmetrisch zu dieser ausgebildet, sodass im Folgenden stellvertretend lediglich die Ladeseite 12 weiter erläutert wird.

Die Ladeseite 12 und die Wartungsseite 14 weisen jeweils ein Öffnungselement **16** beziehungsweise **18** auf.

Dieses Ausführungsbeispiel weist noch eine zweite Wartungsseite 15 auf. Die zweite Wartungsseite **15** ist analog zur Wartungsseite 14 und im Wesentlichen spiegelsymmetrisch zu dieser ausgebildet, sodass im Folgenden stellvertretend lediglich die Wartungsseite 14 weiter erläutert wird.

Das Öffnungselement 16 der Ladeseite 12 weist zwei vertikal ausgerichtete Klappen **20** und **22** auf.

Die Klappe 20 ist auf einer Unterseite des Werkzeugcontainers 10 angeordnet. Wird sie ausgeklappt, bildet sie eine Rampe. Über die Rampe kann beispielsweise ein Bauroboter in den Werkzeugcontainer 10 eingeladen oder aus diesem ausgeladen werden. Die andere Klappe 22 ist an einer Oberseite des Werkzeugcontainers 10 angeordnet. Sie kann somit nach oben hin ausgeklappt werden.

Das Öffnungselement 18 der Wartungsseite 14 ist als zweiflügeliges horizontal öffnendes Tor ausgebildet. Die Öffnungselemente 16, 18 sind somit beide zweiteilig ausgebildet.

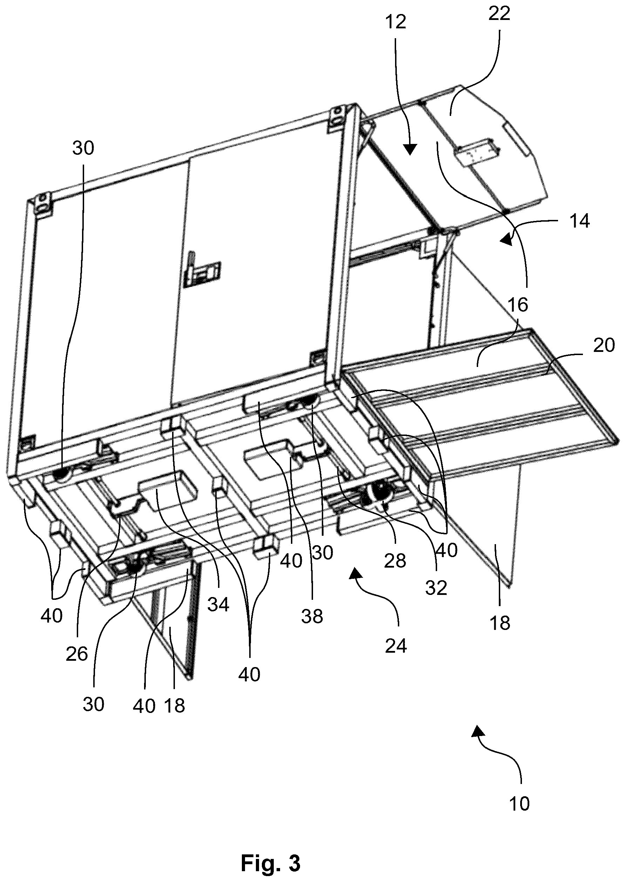

Wie beispielsweise in der Ansicht gemäß Fig. 3 erkennbar ist, weist der Werkzeugcontainer 10 ein Fahrwerk **24** auf. Das Fahrwerk 24 umfasst zwei Antriebsachsen **26**, **28**. Es ist insgesamt 4-rädrig. Neben drei geradeaus laufenden Rädern **30** weist das Fahrwerk 24 noch ein kartesisch angeordnetes Vierfachrad **32** auf, mit dem sich der Werkzeugcontainer 10 lenken lässt. Die Antriebsachsen 26, 28 werden von zwei Motoren **34**, **38** elektrisch angetrieben, sodass sich der Werkzeugcontainer 10 motorisch angetrieben fortbewegen und mithilfe des Vierfachrades 32 rangieren lässt.

Ferner lassen sich die Räder in ihrer Höhenlage verstellen. Somit kann der Werkzeugcontainer 10 zur Fahrt angehoben werden. Im Stand kann der Werkzeugcontainer 10 abgesenkt werden, bis er auf Stützen **40** aufsitzt, sodass sich seine Standsicherheit verbessern lässt.

Wie beispielsweise anhand von Fig. 1 erkennbar ist, lässt sich die gesamte Wartungsseite 14 öffnen. Das Öffnungselement 18 erstreckt sich dazu über die gesamte Wartungsseite 14 hinweg. Ein in dem Werkzeugcontainer 10 aufgenommener Bauroboter wäre somit über seine gesamte Längsseite hinweg für Wartungstätigkeiten oder dergleichen erreichbar.

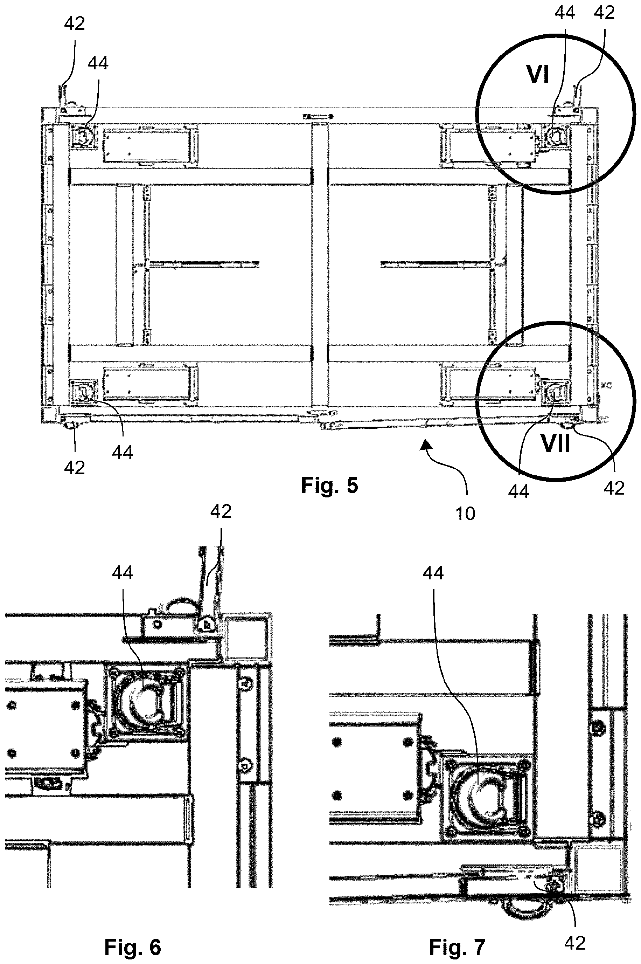

Wie in **Fig. 6 bis 8** zu erkennen, sind an einem Rahmen **41** auf einer Oberseite des Werkzeugcontainers 10 (siehe Fig.) mehrere Tragpunkte **42** in Form von schwenkbaren Haken sowie weitere, ebenfalls schwenkbare Tragpunkte **44** in Form von Ösen ausgebildet.

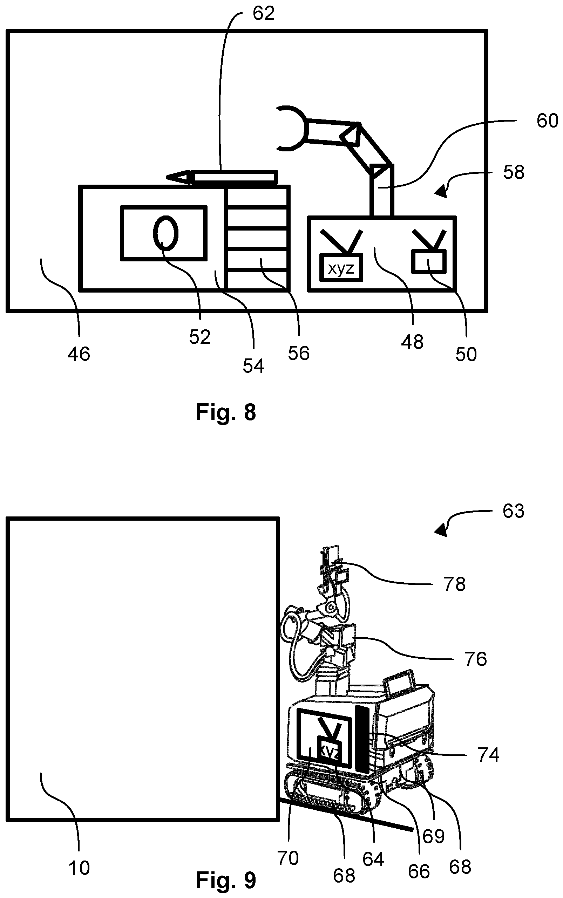

Fig. 7 zeigt einen vergrößerten Ausschnitt **VII** aus Fig. 6. Dargestellt ist insbesondere ein nach außen verschwenkten Tragpunkt 42. Fig. 8 zeigt einen vergrößerten Ausschnitt **VIII** aus Fig. 6. Insbesondere ist ein nach innen verschwenkter Tragpunkt 42 dargestellt. Fig. 7 und Fig. 8 zeigen darüber hinaus jeweils noch einen der Tragpunkte 44 in jeweils nach außen verschwenkter Stellung.

**Fig. 9** zeigt in einer schematischen Darstellung eine Draufsicht auf eine Innenwand **46** eines Innenraums des Werkzeugcontainers 10 (siehe Fig. 1). Die Innenwand 46 kann einer Innenseite der Ladeseite 13 (siehe Fig. 1) entsprechen. Der Werkzeugcontainer 10 ist mit mehreren Funktionselementen ausgestattet. Eines dieser Funktionselemente ist eine als Rechner ausgebildete Steuerung **48**. Die Steuerung 48 ist ausgebildet, alle Funktionen des Werkzeugcontainers 10, insbesondere Bewegungen des Fahrwerks 24 (siehe Fig. 3) sowie der Öffnungselemente 16, 18 (siehe Fig. 1), zu steuern.

Die Steuerung 48 weist eine erste Kommunikationseinrichtung **50** auf. Über die Kommunikationseinrichtung 50 ist die Steuerung 48 an das Internet zur bidirektionalen Datenübertragung angebunden. Weiter weist die Steuerung 48 ein GPS-basiertes Ortungsgerät **51** auf, über das die Steuerung 48 die Position des Werkzeugcontainers 10 lokalisieren kann. Über die Kommunikationseinrichtung 50 kann die Position über das Internet aus Distanz abgefragt werden.

An der Innenwand 46 ist ferner ein elektrischer Ladeanschluss **52** ausgebildet. Dieser ist derart eingerichtet, dass ein Bauroboter selbsttätig sich mit diesem verbinden oder eine bestehende Verbindung lösen kann. Beispielsweise kann der Ladeanschluss 52 induktiv arbeiten. Alternativ oder ergänzend ist auch denkbar, dass der Ladeanschluss 52 eine Ladebuchse aufweist.

Der elektrische Ladeanschluss 52 befindet sich an einem Vorratsbehälter **54**. Der Vorratsbehälter 54 weist mehrere Regalfächer **56** auf. In diesen können Verbrauchsmaterialien, Werkzeuge oder dergleichen zur Verwendung mit einem Bauroboter zwischengelagert werden.

Um einen Bauroboter selbsttätig bestücken zu können, weist der Werkzeugcontainer 10 eine Bestückungsvorrichtung **58** auf. Die Steuerung 48 bildet einen Teil der Bestückungsvorrichtung 58. Weiter weist die Bestückungsvorrichtung 58 einen mehrachsigen Arm **60** auf. Die Bestückungsvorrichtung 58 ist eingerichtet, Teile dem Vorratsbehälter 54 zu entnehmen bzw. in diesen zurückzulegen und mit diesem einen im Werkzeugcontainer 10 befindlichen Bauroboter zu warten.

Der Arm 60 kann auch ein Sprühgerät **62** in Form eines Hochdruckreinigers greifen. Insbesondere ist der Arm 60 eingerichtet, mit Hilfe des Sprühgeräts 62 einen im Werkzeugcontainer 10 aufgenommenen Bauroboter zu reinigen.

Die Steuerung 48, insbesondere mit Hilfe der Kommunikationseinrichtung 50, ist eingerichtet, dass sich die Motoren 34, 38 (siehe Fig. 3), das Absenken und das Hochstellen der Räder 30, 32 (siehe Fig. 3), sowie das Öffnen und Schließen der Öffnungselemente 16, 18 (siehe Fig. 1), Tätigkeiten der Bestückungsvorrichtung 58 sowie Reinigungsvorgänge über das Internet fernsteuern lassen.

Fig. 10 zeigt abschließend in schematisierter, vereinfachter Darstellung, ein System **63** aus dem mobilen Werkzeugcontainer 10 und einem Bauroboter **64**. Der Bauroboter 64 weist ein Fahrwerk **66** mit Ketten **68** und einer Bremse **69**, ein Gehäuse **69**, in dem sich unter anderem eine schematisch dargestellte Robotersteuerung **70**, eine zweite Kommunikationseinrichtung **72** und ein elektrischer Akku **74** befinden, sowie einen mehrachsigen Roboterarm **76** auf. Am Roboterarm 76 wiederum befindet sich ein Endeffektor **78**, der beispielsweise ein Werkzeug zur Ausführung von Bauarbeiten aufnehmen kann.

Über seine zweite Kommunikationseinrichtung 72 kann sich der Bauroboter 64 mit dem Internet verbinden. Insbesondere kann sich der Bauroboter 64 hierüber - und vorzugsweise auch über eine Peer-to-Peer-Direktverbindung auch direkt - mit der ersten Kommunikationseinrichtung 50 des Werkzeugcontainers 10 verbinden. Je nach Anwendungsfall kann dann die Steuerung 48 den Bauroboter 64 überwachen und / oder steuern sowie umgekehrt der Bauroboter 64 mit seiner Robotersteuerung 70 den Werkzeugcontainer 10 überwachen und / oder steuern.

Insbesondere kann der Bauroboter 64 hierüber das Ortungsgerät 51 abfragen und dadurch die Position des Werkzeugcontainers 10 ermitteln. Er kann ferner die Öffnungselemente 16, 18 ferngesteuert öffnen oder schließen. Somit kann er zum Werkzeugcontainer 10 fahren, das Öffnungselement 16 der Ladeseite 12 öffnen, in den Werkzeugcontainer 10 hineinfahren und anschließend das Öffnungselement 16 wieder schließen. Er kann dann mit Hilfe der Bestückungsvorrichtung 58 sowie dem Sprühgerät 62 erforderliche Wartungsarbeiten, vorzugsweise einschließlich Reinigungsarbeiten, autonom durchführen.

### Bezugszeichenliste

- 10: Werkzeugcontainer
- 12: Ladeseite
- 13: Ladeseite
- 14: Wartungsseite
- 15: Wartungsseite
- 16: Öffnungselement
- 18: Öffnungselement
- 20: Klappe
- 22: Klappe
- 24: Fahrwerk
- 26: Antriebsachse
- 28: Antriebsachse
- 30: Rad
- 32: Vierfachrad
- 34: Motor
- 38: Motor
- 40: Stütze
- 42: Tragpunkt
- 44: Tragpunkt
- 46: Innenwand
- 48: Steuerung
- 50: Kommunikationseinrichtung
- 51: Ortungsgerät
- 52: Ladeanschluss
- 54: Vorratsbehälter
- 56: Regalfach
- 58: Bestückungsvorrichtung
- 60: Arm
- 62: Sprühgerät
- 63: System
- 64: Bauroboter
- 66: Fahrwerk
- 68: Kette
- 69: Bremse
- 69: Gehäuse
- 70: Robotersteuerung
- 72: Kommunikationseinrichtung
- 74: Akku
- 76: Roboterarm
- 78: Endeffektor

## Patentansprüche

1. Mobiler Werkzeugcontainer (10) zur Aufnahme eines Bauroboters (64),
**dadurch gekennzeichnet,**
**dass** der Werkzeugcontainer (10) eine Ladeseite (12, 13) und eine von der Ladeseite (12, 13) verschiedene Wartungsseite (14, 15) aufweist, wobei die Ladeseite (12, 13) und die Wartungsseite (14, 15) jeweils wenigstens ein Öffnungselement (16, 18) zum Öffnen oder Schließen der jeweiligen Seite aufweisen.

2. Mobiler Werkzeugcontainer (10) nach einem der vorhergehenden Ansprüche, **dadurch gekennzeichnet, dass** die Ladeseite (12, 13) ein Öffnungselement (16, 18) aufweist, das eine vertikale Klappe (20) aufweist.

3. Mobiler Werkzeugcontainer (10) nach einem der vorhergehenden Ansprüche, **dadurch gekennzeichnet, dass** die Ladeseite (12, 13) und / oder die Wartungsseite (14, 15) ein wenigstens zweiteiliges Öffnungselement (16, 18) aufweist.

4. Mobiler Werkzeugcontainer (10) nach einem der vorhergehenden Ansprüche, **dadurch gekennzeichnet, dass** sich auf der Wartungsseite (14, 15) das Öffnungselement (16, 18) über wenigstens die Hälfte der Wartungsseite (14, 15) erstreckt.

5. Mobiler Werkzeugcontainer (10) nach einem der vorhergehenden Ansprüche, **dadurch gekennzeichnet, dass** der mobile Werkzeugcontainer (10) ein Fahrwerk (24) aufweist.

6. Mobiler Werkzeugcontainer (10) nach einem der vorhergehenden Ansprüche, **dadurch gekennzeichnet, dass** das Fahrwerk (24) einen Motor (34) zur Fortbewegung des mobilen Werkzeugcontainers (10) aufweist.

7. Mobiler Werkzeugcontainer (10) nach einem der vorhergehenden Ansprüche, **dadurch gekennzeichnet, dass** das Fahrwerk (24) verstellbar, insbesondere absenkbar und / oder hochstellbar, ausgebildet ist.

8. Mobiler Werkzeugcontainer (10) nach einem der vorhergehenden Ansprüche, **dadurch gekennzeichnet, dass** wenigstens eine Funktion des Werkzeugcontainers (10) fernsteuerbar ist.

9. Mobiler Werkzeugcontainer (10) nach einem der vorhergehenden Ansprüche, **dadurch gekennzeichnet, dass** der Werkzeugcontainer (10) Tragpunkte (42, 44) zum Hieven aufweist.

10. Mobiler Werkzeugcontainer (10) nach einem der vorhergehenden Ansprüche, **dadurch gekennzeichnet, dass** wenigstens einer der Tragpunkte (42, 44) schwenkbar ist.

11. Mobiler Werkzeugcontainer (10) nach einem der vorhergehenden Ansprüche, **dadurch gekennzeichnet, dass** in einem Innenraum (47) des Werkzeugcontainers (10) ein elektrischer Ladeanschluss (52) ausgebildet ist.

12. Mobiler Werkzeugcontainer (10) nach einem der vorhergehenden Ansprüche, **dadurch gekennzeichnet, dass** im Innenraum ein Vorratsbehälter (54) angeordnet und / oder ausgebildet ist.

13. Mobiler Werkzeugcontainer (10) nach einem der vorhergehenden Ansprüche, **dadurch gekennzeichnet, dass** der Werkzeugcontainer (10) eine automatische Bestückungsvorrichtung (58) zur Bestückung eines im Werkzeugcontainer (10) befindlichen Bauroboters (64) aufweist.

14. Mobiler Werkzeugcontainer (10) nach einem der vorhergehenden Ansprüche, **dadurch gekennzeichnet, dass** der Werkzeugcontainer (10) ein Ortungsgerät (51) zur Lokalisierung des Werkzeugcontainers (10) aufweist.

15. System (63) aus einem mobilen Werkzeugcontainer (10) nach einem der vorhergehenden Ansprüche und einem Bauroboter (64), wobei der mobile Werkzeugcontainer (10) eine erste Kommunikationseinrichtung (50, 72) aufweist und der Bauroboter (64) eine zweite Kommunikationseinrichtung (50, 72) aufweist, wobei die erste und die zweite Kommunikationseinrichtung (50, 72) eingerichtet sind, miteinander Daten auszutauschen.
